# EUROPÄISCHE PATENTSCHRIFT

(11) **EP 2 301 702 B1**
(45) Veröffentlichungstag und Bekanntmachung des Hinweises auf die Patenterteilung: **12.10.2011**
(21) Anmeldenummer: 10010234.2
(22) Anmeldetag: 22.09.2010
(51) Int. Cl.: B23D 77/00, B23D 77/08

(54) **Reibahle und deren Verwendung**
Reamer and use of same
Alésoir et son utilisation

(30) Priorität: 24.09.2009 DE 102009042951
(43) Veröffentlichungstag der Anmeldung: 30.03.2011
(73) Patentinhaber: Hans Langesee Ges.m.b.H., 6280 Zell am Ziller (AT)
(72) Erfinder: Geisler, Gerhard, 6271 Uderns (AT)
(74) Vertreter: Grape, Knut

(56) Entgegenhaltungen:
- CH-A5- 666 643
- DE-A1- 19 950 168
- DE-C- 684 999
- GB-A- 605 359
- US-A- 945 566

## Beschreibung

Die vorliegende Erfindung betrifft eine Reibahle und deren Verwendung.

Reibahlen sind allgemein bekannt. Es handelt sich dabei um Werkzeuge zur Feinbearbeitung von Bohrungen durch (Aus-) Reiben, um die Oberfächengüte und die Form- sowie Maßgenauigkeit der Bohrungen zu verbessern. Reibahlen finden darüber hinaus praktische Verwendung, um die Oberfächengüte und die Form- sowie Maßgenauigkeit von Buchsen aus Metall oder (faserverstärktem) Kunststoff zu erhöhen. Beispielsweise kommen Reibahlen zum (Aus-)Reiben von Gleitlagerbuchsen, welche einer Lagerung von Seilrollwippen an Stützpfeilern oder einer Gehängelagerung von Gondeln und Sesseln von personen- oder lastenbefördernden Seilbahnen dienen, zum Einsatz. So erfolgt durch das Einpressen solcher Gleitlagerbuchsen eine Verformung mit Maßänderungen, die im Durchmesser unter Umständen bis zu 1 mm und mehr von dem jeweiligen Sollmaß abweichen können. Die Gleitlagerbuchsen werden mithin gestaucht und sind für aufzunehmende Bolzen nicht mehr maßhaltig. Allerdings haben sich die bisher bekannten Reibahlen in der Praxis sämtlich als ausgesprochen nachteilig erwiesen. Zum einen lassen sich mit derartigen Reibahlen keine ausreichende Oberflächengüte und Formsowie Maßgenauigkeit der Buchsen erreichen. Zum anderen sind derartige Reibahlen in der Praxis allesamt aufgrund einer geraden Nutung schwer ansetzbar und somit ausgesprochen aufwendig zu handhaben. Letzteres kann wiederum gleichermaßen zu einer nicht befriedigenden Oberflächengüte und Form- sowie Maßgenauigkeit der Gleitlagerbuchsen und zugleich zu einem erhöhten Zeitaufwand bei der Montage, Instandhaltung und Wartung von personen- oder lastenbefördernden Seilbahnen insgesamt führen.

Darüber hinaus ist aus der GB 605 359 A eine Reibahle gemäß dem Oberbegriff des Anspruchs 1 mit einem Grundkörper und wenigstens einer dem Grundkörper zugeordneten Schneide bekannt. Der Grundkörper umfasst einen sich von einer Stirnseite des Grundkörpers koaxial zur Längsachse des Grundkörpers nach innen erstreckenden, zylindrischen Spanraum. Die wenigstens eine Schneide ist durch ein im Bereich einer den Spanraum umgebenden Wandung angeordnetes und schräg zur Längsachse des Grundkörpers verlaufendes Langloch gebildet. Dabei ist ein vorlaufender Randbereich des Langlochs wenigstens teilweise mit einer Freifläche versehen. Eine Einstellung des nachlaufenden Randbereiches des Langlochs ist nicht vorhanden oder möglich.

Der vorliegenden Erfindung liegt daher die Aufgabe zugrunde, eine Reibahle zur Verfügung zu stellen; mit welcher sich die obigen Nachteile verhindern lassen, welche mithin konstruktiv besonders einfach, zugleich kompakt und funktionssicher ist, eine hohe Oberflächengüte und Form- sowie Maßgenauigkeit sicherstellt und gleichzeitig in der Praxis eine ausgesprochen einfache und damit einhergehend sehr zeitsparende Handhabung ermöglicht, und deren Verwendung bereitzustellen.

Diese Aufgabe wird auf überraschend einfache Weise durch die Merkmale des Anspruchs 1 gelöst.

Durch die Ausgestaltung der erfindungsgemäßen Reibahle mit einem Grundkörper und wenigstens einer dem Grundkörper zugeordneten Schneide, wobei der Grundkörper einen sich von einer Stirnseite des Grundkörpers koaxial zur Längsachse des Grundkörpers nach innen erstreckenden, zylindrischen Spanraum umfasst und wobei die wenigstens eine Schneide durch ein im Bereich einer den Spanraum umgebenden Wandung angeordnetes und schräg zur Längsachse des Grundkörpers verlaufendes Langloch gebildet ist, wobei ein vorlaufender Randbereich des Langlochs wenigstens teilweise mit einer Freifläche versehen ist und wobei ein nachlaufender Randbereich des Langlochs wenigstens teilweise durch ein in dem Spanraum axial verschiebbares Spannelement radial nach außen aufweitbar ist, wird eine besonders einfache, zudem kompakte und funktionszuverlässige Bauweise der erfindungsgemäßen Reibahle erreicht. Weiterhin lassen mit der erfindungsgemäßen Reibahle aufgrund der konstruktiven Ausgestaltung der wenigstens einen Schneide eine hohe Oberflächengüte und Form- sowie Maßgenauigkeit erreichen. Demnach sorgt die Anordnung des Langlochs schräg zur Längsachse des Grundkörpers für einen sogenannten "weichen" Anschnitt bzw. "Schälanschnitt" und eine sofortige Abfuhr der Späne durch das Langloch in den Spanraum. Darüber hinaus ist mit der erfindungsgemäßen Reibahle gleichzeitig in der Praxis eine ausgesprochen einfache Handhabung ermöglicht, was wiederum zu einer erheblichen Zeitersparnis bei Montage-, Wartungs- und Instandhaltungsarbeiten vor Ort führt. Schließlich gestaltet sich die Herstellung der erfindungsgemäßen Reibahle einfach und wenig arbeitsintensiv und ist somit ausgesprochen kostengünstig.

Weitere vorteilhafte Einzelheiten der erfindungsgemäßen Reibahle sind in den Ansprüchen 2 bis 14 beschrieben.

Vorzugsweise beträgt der Winkel zwischen der Längsachse des Grundkörpers und der Längsachse des Langlochs nach Anspruch 2 zwischen 5° und 30°, insbesondere zwischen 8° und 12°, und vorzugsweise etwa 10°.

Von großer Bedeutung für eine hohe Oberflächengüte bei gleichzeitig ausgesprochen einfacher und damit kostengünstiger Bauweise zum einen und für eine vielseitige Verwendungsmöglichkeit der erfindungsgemäßen Reibahle zum anderen sind die Merkmale des Anspruchs 3. Danach ist das in dem Spanraum axial verschiebbare Spannelement derart ausgebildet, dass der nachlaufende Randbereich des Langlochs wenigstens teilweise durch das in dem Spanraum axial verschiebbare Spannelement kontinuierlich radial nach außen aufweitbar ist. Als besonders vorteilhaft erweist sich in diesem Zusammenhang eine kontinuierliche, d.h. stufenlose, Einstellung. Eine solche Einstellung ist zum Beispiel für einen Bereich von 0 mm bis zu + 3 mm, insbesondere bis + 0,3 mm, oder auch mehr über den Nenndurchmesser des Grundkörpers der erfindungsgemäßen Reibahle möglich.

Entsprechend den Maßnahmen des Anspruchs 4 ist das Spannelement aus einer Ausgangsstellung in eine Spannstellung axial verschiebbar und in der Spannstellung arretierbar, und umgekehrt.

Des Weiteren ist erfindungsgemäß vorgesehen, dass das Spannelement nach Anspruch 5 im Wesentlichen scheibenförmig ausgebildet ist und mit einer Innenseite der den Spanraum umgebenden Wandung über dessen Umfangsfläche in Kontakt steht sowie zusammenwirkt. Das Spannelement wirkt wie ein Messschieber. Vorzugsweise liegt es im Rahmen der Erfindung, die Innenseite der den Spanraum umgebenden Wandung nach Anspruch 6 relativ zur Längsachse des Grundkörpers von der Stirnseite des Grundkörpers ausgehend hin zu einem Boden des Spanraumes konusoder kegelförmig auszubilden.

In diesem Zusammenhang ist die Umfangsfläche des Spannelementes nach Anspruch 7 relativ zur Längsachse des Grundkörpers vorteilhafterweise parallel verlaufend oder von der Stirnseite des Grundkörpers ausgehend hin zu einem Boden des Spanraumes konus- oder kegelförmig ausgebildet.

Besonders vorteilhaft sind die Merkmale des Anspruchs 8, wonach das Spannelement an einem Schraubbolzen, der mit dem Grundkörper über ein Gewinde zusammenwirkt, befestigt ist.

Zur Erhöhung der Kippstabilität weist das Spannelement dabei nach Anspruch 9 einen Kragen oder dergleichen Manschette mit einer den Schraubbolzen umgebenden und mit diesem in Kontakt stehenden Anlagefläche auf.

Das Spannelement ist zweckmäßigerweise auf dem Schraubbolzen über eine Schraub- oder dergleichen -Verbindung axial gesichert befestigt.

In alternativer Ausgestaltung zu einer Befestigung an einem gesonderten Schraubbolzen kann das Spannelement auch mit einem Schraubbolzen, der mit dem Grundkörper über ein Gewinde zusammenwirkt, integral bzw. einstückig ausgebildet sein.

Von ganz besonders großem Interesse sind weiterhin die konstruktiven Maßnahmen des Anspruchs 10, wonach die Außenseite der den Spanraum umgebenden Wandung in einem ringförmigen Abschnitt, welcher im Wesentlichen dem nachlaufenden Randbereich des Langlochs entspricht, relativ zur Längsachse des Grundkörpers von der Stirnseite des Grundkörpers ausgehend hin zu der dem Spanraum entfernten Stirnseite konus- oder kegelförmig ausgebildet ist.

In diesem Zusammenhang beträgt der Winkel zwischen der Außenseite der den Spanraum umgebenden Wandung und der Längsachse des Grundkörpers in dem ringförmigen Abschnitt bevorzugt zwischen 1° und 5°, insbesondere zwischen 2° und 3°, und vorzugsweise von 2,3°. Hierdurch lässt sich zusätzlich ein sogenannter "weicher" Anschnitt bzw. "Schälanschnitt" erhalten.

Dabei liegt es weiterhin im Rahmen der Erfindung, dass der ringförmige Abschnitt nach Anspruch 11 eine Breite aufweist, die wenigstens gleich, insbesondere größer, als der nachlaufende Randbereich des Langlochs ist.

Von besonderem Vorteil sind die Merkmale des Anspruchs 12, dass nämlich der Grundkörper mit einem oder zwei Führungselement/en, das/die jeweils einer Stirnseite des Grundkörpers zugeordnet ist/sind, lösbar verbunden ist. Das/die Führungselement/e gewährleisten eine optimale Führung des Grundkörpers zum (Aus-)Reiben von Bohrungen bzw. Buchsen und damit eine optimale Fluchtung für den nachfolgenden Einbau von zum Beispiel Bolzen in entsprechende Gleitlagerbuchsen. Dadurch bleiben Symmetrie, Konzentrizität und Koaxialität unbeeinflusst.

Des Weiteren ist der Grundkörper mit dem einen oder den zwei Führungselement/en, über eine Gewinde-, Steck- und Rast- oder Bayonette-Verbindung lösbar verbunden.

Vorzugsweise ist dem Grundkörper und dem einen oder den zwei Führungselement/en eine Zentriereinrichtung zur Zentrierung des Grundkörpers und des einen oder der zwei Führungselementes/Führungselemente zugeordnet ist. Auf diese Weise lassen sich der Grundkörper und das eine oder die zwei Führungselement/e zentrieren und damit zueinander fluchtend sowie passgenau festlegen.

Zur Verbesserung seiner Führungsfunktion weist das Führungselement, welches der zu dem Spanraum entfernten Stirnseite des Grundkörpers zugeordnet ist, nach Anspruch 13 einen Durchmesser auf, der im Wesentlichen dem Durchmesser des Grundkörpers im Bereich der zu dem Spanraum entfernten Stirnseite entspricht.

In diesem Zusammenhang ist das Führungselement, welches der zu dem Spanraum entfernten Stirnseite des Grundkörpers zugeordnet ist, bevorzugt mit einem auf der Längsachse des Führungselementes angeordneten, profilierten Zapfen oder dergleichen Antriebselement zur Aufnahme in einer Antriebseinrichtung versehen. Der Antrieb für eine rotatorische Bewegung der erfindungsgemäßen Reibahle kann somit beispielsweise durch eine übliche Bohrmaschine erfolgen.

Darüber hinaus liegt es im Rahmen der Erfindung, dass das Führungselement, welches der zu dem Spanraum benachbarten Stirnseite des Grundkörpers zugeordnet ist, nach Anspruch 14 einen Durchmesser aufweist, der geringfügig kleiner als der Durchmesser des Grundkörpers im Bereich der Stirnseite des Grundkörpers ist. Auf diese Weise wird zusätzlich ein "weicher" Anschnitt bzw. "Schälanschnitt" erhalten.

In diesem Zusammenhang ist es von besonderem Vorteil, das Führungselement, welches der zu dem Spanraum benachbarten Stirnseite des Grundkörpers zugeordnet ist, relativ zur Längsachse des Führungselementes von dem Grundkörper ausgehend hin zu dem freien Ende des Führungselementes konus- oder kegelförmig auszubilden.

Zweckmäßigerweise ist/sind der Grundkörper und/oder das/die Führungselement/e und/oder das Spannelement aus Metall, insbesondere (nicht-rostendem oder gehärtetem) Stahl, Edelstahl, Titan, Mangan, Chrom, Nickel, Aluminium, Messing, Zink; Rotgusslegierungen oder einer Legierung daraus gebildet. Materialien, wie vorzugsweise gehärteter Stahl oder Edelstahl, werden einerseits der Forderung nach kostengünstiger Herstellung der erfindungsgemäßen Reibahle und andererseits der Forderung nach hoher Oberflächengüte des bearbeiteten Werkstücks gerecht.

Schließlich liegt es noch im Rahmen der Erfindung, die erfindungsgemäße Reibahle nach Anspruch 15 zum (Aus-)Reiben einer Bohrung eines Werkstücks oder einer Buchse aus Metall oder (faserverstärktem) Kunststoff zu verwenden und insbesondere zum (Aus-)Reiben von Gleitlagerbuchsen aus (faserverstärktem) Kunststoff, insbesondere zur Montage, Wartung und Instandhaltung von personen- oder lastenbefördernden Seilbahnen.

Weitere Merkmale, Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: eine Seitenansicht einer Ausführungsform einer erfin- dungsgemäß ausgebildeten Reibahle mit einem Grundkör- per und zwei daran lösbar verbundenen Führungselemen- ten,
- Fig. 2: eine Längsschnittansicht durch die Ausführungsform der erfindungsgemäß ausgebildeten Reibahle mit einem Grundkörper und zwei daran lösbar verbundenen Füh- rungselementen entsprechend der Linie II-II in der Fig. 1,
- Fig. 3: eine Seitenansicht der Ausführungsform des Grundkör- pers der erfindungsgemäß ausgebildeten Reibahle entsprechend der Fig. 1 in der Ausgangsstellung, in vergrößerter Darstellung,
- Fig. 4: eine Querschnittansicht durch die Ausführungsform des Grundkörpers entsprechend der Linie IV-IV in der Fig. 3,
- Fig. 5: eine Querschnittansicht durch die Ausführungsform des Grundkörpers entsprechend Ausschnitt V in der Fig. 4, in vergrößerter Darstellung,
- Fig. 6: eine Seitenansicht der Ausführungsform des Grundkör- pers der erfindungsgemäß ausgebildeten Reibahle entsprechend der Fig. 1 in der Spannstellung, in vergrößerter Dar- stellung,
- Fig. 7: eine Querschnittansicht durch die Ausführungsform des Grundkörpers entsprechend der Linie VII-VII in der Fig. 6, und
- Fig. 8: eine Querschnittansicht durch die Ausführungsform des Grundkörpers entsprechend Ausschnitt {VIII} in der Fig. 7, in vergrößerter Darstellung.

Bei der nachfolgenden Beschreibung einer Ausführungsform einer erfindungsgemäßen Reibahle 10 sind einander entsprechende, gleiche Bauteile jeweils mit identischen Bezugsziffern versehen.

Die erfindungsgemäße Reibahle 10 findet in vorteilhafter Weise zum (Aus-)Reiben einer Bohrung eines Werkstücks oder einer Buchse aus Metall oder (faserverstärktem) Kunststoff Verwendung. Darüber hinaus lässt sich die erfindungsgemäße Reibahle 10 in besonders vorteilhafter Weise zum (Aus-)Reiben von Gleitlagerbuchsen aus (faserverstärktem) Kunststoff, insbesondere zur Montage, Wartung und Instandhaltung von personenoder lastenbefördernden Seilbahnen verwenden.

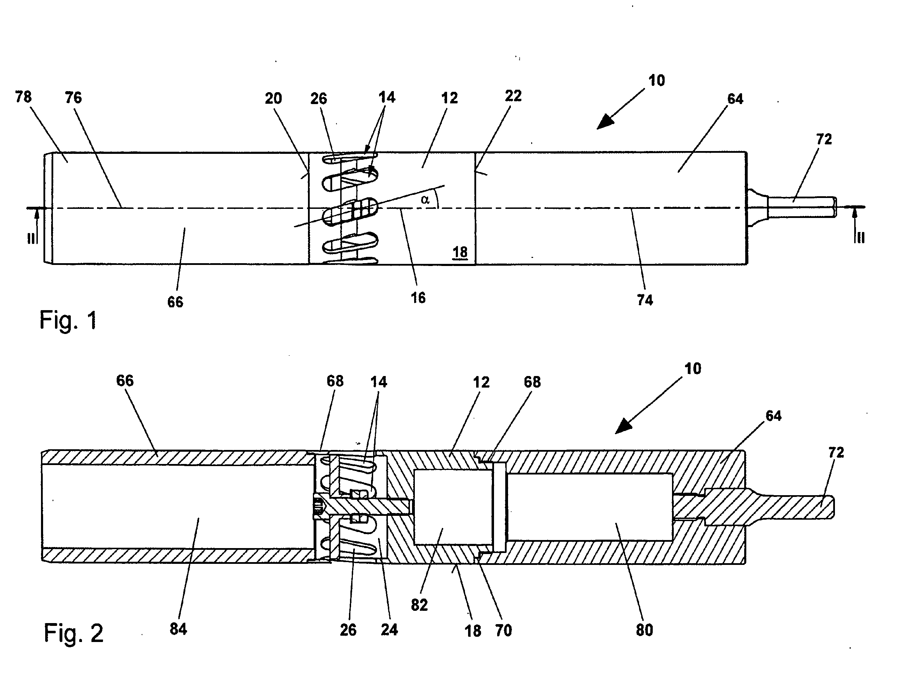

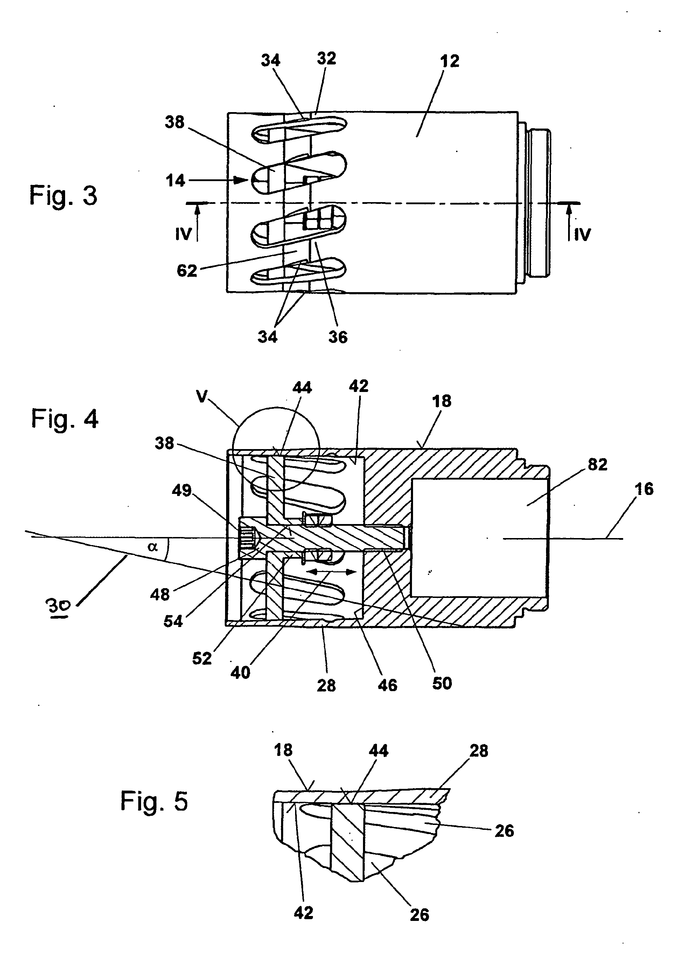

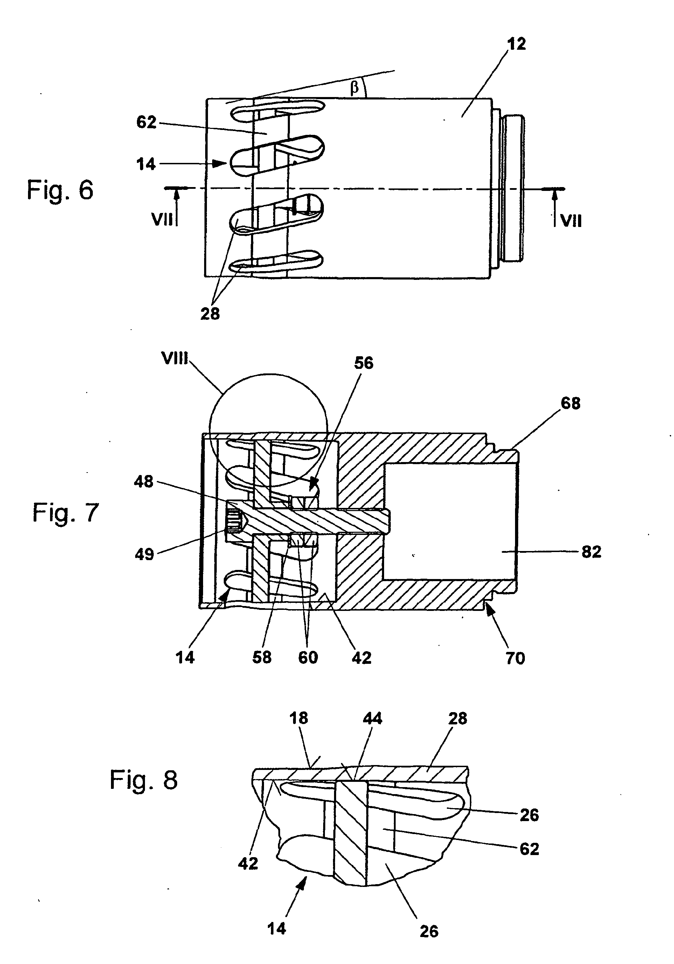

Die in den Fig. 1 bis 8 schematisch dargestellte Reibahle 10 nach der Erfindung umfasst einen Grundkörper 12 und wenigstens eine Schneide 14, welche dem Grundkörper 12 zugeordnet ist. Bei dem gezeigten Ausführungsbeispiel sind insgesamt zehn Schneiden 14 vorgesehen. Davon sind in den Fig. 1, 2 und 4 jeweils fünf, in der Fig. 3 sogar andeutungsweise sechs und in den übrigen Fig. 6 und 7 jeweils vier Schneiden 14 sichtbar.

Der Grundkörper 12 ist im Wesentlichen zylindrisch ausgebildet. Der Grundkörper 12 erstreckt entlang seiner Längsachse 16 und weist demzufolge eine zylindrische Außenseite 18 und zwei die Außenseite 18 begrenzende Stirnseiten 20, 22 auf. Die Stirnseiten 20, 22 sind zu der Längsachse 16 und der Blattebene senkrecht angeordnet. Die Längsachse 16 des Grundkörpers 12 fällt zugleich mit der Längsachse der erfindungsgemäßen Reibahle 10 zusammen.

Wie in den Fig. 2, 4 und 7 ersichtlich ist, weist der Grundkörper 12 einen zylindrischen Spanraum 24 auf. Der zylindrische Spanraum 24 erstreckt sich dabei von der einen (linken) Stirnseite 20 des Grundkörpers 12 koaxial zur Längsachse 16 des Grundkörpers 12 nach innen hin zu der anderen (rechten) Stirnseite 22.

Die wenigstens eine Schneide 14 ist durch ein Langloch 26 gebildet. Das Langloch 26 ist im Bereich einer Wandung 28, welche den Spanraum 24 umgibt bzw. umschließt, angeordnet und verläuft schräg zur Längsachse 16 des Grundkörpers 12 auf dessen Außenseite 18.

Der Winkel α zwischen der Längsachse 16 des Grundkörpers 12 und der Längsachse 30 des Langlochs 26 bewegt sich in einem Bereich zwischen 5° und 30° und insbesondere zwischen 8° und 12°, beträgt in ganz bevorzugter Weise etwa 10°. Über das Langloch 26 kommunizieren die Umgebung des Grundkörpers 12 und der Spanraum 24. Über das Langloch 26 gelangen die Späne in den Spanraum 24.

Entsprechend den Fig. 1 und 3 ist ein vorlaufender Randbereich 32 des Langlochs 26 wenigstens teilweise mit einer Freifläche 34 versehen. Ein nachlaufender Randbereich 36 des Langlochs 26 ist wenigstens teilweise durch ein Spannelement 38, das in dem Spanraum 24 axial verschiebbar ist, radial nach außen aufweitbar. In ganz vorteilhafter Weise ist das in dem Spanraum 24 axial verschiebbare Spannelement 38 derart ausgebildet, dass der nachlaufende Randbereich 36 des Langlochs 26 wenigstens teilweise kontinuierlich, d.h. stufenlos, radial nach außen aufweitbar ist.

Das Spannelement 38 ist aus einer Ausgangsstellung, welche anhand der Fig. 3 bis 5 veranschaulicht ist, in eine Spannstellung, welche in den Fig. 6 bis 8 dargestellt ist, axial verschiebbar und in der Spannstellung arretierbar, und umgekehrt (Doppelpfeil 40).

Bei dem in den Fig. 3 bis 8 gezeigten Ausführungsbeispiel der erfindungsgemäßen Reibahle 10 wird der nachlaufende Randbereich 36 des Langlochs 26 durch das Spannelement 38 in der Ausgangsstellung (Fig. 3 bis 5) nicht und in der Spannstellung (Fig. 6 bis 8) teilweise beaufschlagt. Der nachlaufende Randbereich 36 des Langlochs 26 befindet sich mithin in der Ausgangsstellung in einem unbelasteten bzw. entspannten Zustand, in der Spannstellung in einem teilweise belasteten bzw. gespannten Zustand. Ohne im Einzelnen dargestellt zu sein, kann das Spannelement 38 jedoch noch zusätzlich in eine End-Spannstellung verbracht werden, in welcher der nachlaufende Randbereich 36 des Langlochs 26 einen maximal belasteten bzw. maximal gespannten Zustand einnimmt.

Wie insbesondere in den Fig. 2, 4 und 7 entnehmbar ist, ist das Spannelement 38 im Wesentlichen scheibenförmig ausgebildet, steht mit der Innenseite 42 der Wandung 28, welche den Spanraum 24 umgibt, über dessen Umfangsfläche 44 in Kontakt und wirkt mit der Innenseite 42 zusammen.

Die Innenseite 42 der den Spanraum 24 umgebenden Wandung 28 ist relativ zur Längsachse 16 des Grundkörpers 12 von der Stirnseite 20 ausgehend hin zu einem Boden 46 des Spanraumes 24 konus- oder kegelförmig ausgebildet. Mit anderen Worten nimmt die Dicke der den Spanraum 24 umgebenden Wandung 28 von der Stirnseite 20 des Grundkörpers 12 hin zu dem Boden 46 des Spanraumes 24 nach innen zu, wächst quasi nach innen an.

Gleichzeitig ist die Umfangsfläche 44 des Spannelementes 38 bei der vorliegenden Ausführungsform, wie in den Fig. 2, 4, 5, 7 und 8 angedeutet ist, axial von der Stirnseite 20 des Grundkörpers ausgehend hin zu dem Boden 46 des Spanraumes 24 ebenfalls
konus- oder kegelförmig ausgebildet. Eine solche konstruktive Ausgestaltung des Spannelementes 38 begünstigt die Leichtgängigkeit und unterstützt somit die axiale Verschiebung des Spannelementes 38 entlang der Innenseite 42 der Wandung 28.

Ohne im Einzelnen dargestellt zu sein, ist es jedoch ebenso denkbar, dass die Umfangsfläche 44 des Spannelementes 38 relativ zur Längsachse 16 des Grundkörpers 12 parallel verlaufend ausgebildet ist.

Entsprechend den Fig. 2, 4 und 7 ist das Spannelement 38 an einem Schraubbolzen 48 befestigt. Der Schraubbolzen 38 weist kopfseitig eine Profilierung, zum Beispiel ein Innensechskant-Profil 49, auf und wirkt fußseitig mit dem Grundkörper 12 über ein Gewinde 50 zusammen. Ohne im Einzelnen dargestellt zu sein, kann die Profilierung auch ein Außensechskant-, Querschlitz-, ein Kreuzschlitz- oder dergleichen -Profil (jeweils nicht gezeigt) umfassen, um so den Schraubbolzen 48 zusammen mit dem Spannelement 38 axial zu verschieben.

Nachdem es sich bei dem Spannelement 38 und dem Schraubbolzen 48 bei der Ausführungsform der erfindungsgemäßen Reibahle 10 nach den Fig. 1 bis 8 um voneinander getrennte Bauteile handelt, ist das Spannelement 38 zur Erhöhung von dessen Kippstabilität mit einem Kragen 52 oder dergleichen Manschette versehen. Der Kragen 52 umfasst eine Anlagefläche 54, welche den Schraubbolzen 48 umgibt und mit diesem, vorzugsweise passgenau, in Kontakt steht.

Das Spannelement 38 ist weiterhin auf dem Schraubbolzen 48. über eine Schraub-Verbindung 56 oder dergleichen -Verbindung axial gesichert. Die Schraub-Verbindung 56 umfasst vorliegend eine Unterlegscheibe 58 und zwei miteinander zu konternde Schraubenmuttern 60.

Ohne im Einzelnen dargestellt zu sein, kann das Spannelement 38 mit dem Schraubbolzen 48, der mit dem Grundkörper 12 über das Gewinde 50 zusammenwirkt, ebenso integral, d.h. einstückig, ausgebildet sein.

Des Weiteren lässt sich insbesondere den Fig. 1, 3, 5, 6 und 8 entnehmen, dass die Außenseite 18 des Grundkörpers 12 bzw. der den Spanraum 24 umgebenden Wandung 28 in einem ringförmigen bzw. ringförmig umlaufenden Abschnitt 62 relativ zur Längsachse 16 des Grundkörpers 12 von der Stirnseite 20 des Grundkörpers 12 ausgehend hin zu der dem Spanraum 24 entfernten Stirnseite 22 konus- oder kegelförmig ausgebildet ist. Mit anderen Worten ist die den Spanraum 24 umgebende Wandung 28 in dem ringförmigen Abschnitt 62 von der Stirnseite 20 des Grundkörpers 12 hin zu dem Boden 46 des Spanraumes 24 nach außen abgeschrägt. Die Dicke der den Spanraum 24 umgebende Wandung 28 nimmt in dem ringförmigen Abschnitt 62 quasi nach außen in axialer Richtung.zu dem Boden 46 zu.

Der Winkel β zwischen der Außenseite 18 der den Spanraum 24 umgebenden Wandung 28 und der Längsachse 16 des Grundkörpers 12 in dem ringförmigen Abschnitt 62 beträgt zwischen 1° und 5°, insbesondere zwischen 2° und 3°, und vorzugsweise 2,3°.

Der ringförmige Abschnitt 62 weist eine Breite auf, die wenigstens gleich und in bevorzugter Weise größer als der nachlaufende Randbereich 36 des Langlochs 26 ist. Mithin überdeckt bzw. übergreift der ringförmige Abschnitt 62 idealerweise den nachlaufenden Randbereich 36 zumindest geringfügig.

Bei der Ausführungsform der erfindungsgemäßen Reibahle 10 nach den Fig. 1 bis 8 ist der Grundkörper 12 weiterhin mit einem oder - wie vorliegend - mit zwei zylindrischen Führungselementen 64, 66 lösbar verbunden. Die zwei Führungselemente 64, 66 sind jeweils einer Stirnseite 20 bzw. 22 des Grundkörpers 12 zugeordnet.

Der Grundkörper 12 ist mit den zwei Führungselementen 64, 66 jeweils über eine Gewinde-Verbindung 68 lösbar verbunden. Alternativ ist es jedoch ebenso denkbar, anstelle einer Gewinde-Verbindung 68 auch eine Steck- und Rast- oder BajonettVerbindung vorzusehen.

Zusätzlich kann dem Grundkörper 12 und dem einen oder den zwei Führungselement/en 64, 66 eine Zentriereinrichtung 70 zugeordnet sein, um den Grundkörper 12 und das eine Führungselement 64 oder die zwei Führungselemente 64, 66 zueinander zu zentrieren. Bei dem vorliegenden Ausführungsbeispiel der erfindungsgemäßen Reibahle 10, wie in der Fig. 2 angedeutet ist, ist lediglich zwischen dem Grundkörper 12 und dem Führungselement 64 eine Zentriereinrichtung 70 zwischengeordnet. Ohne im Einzelnen dargestellt zu sein, kann eine solche Zentriereinrichtung 70 jedoch auch zwischen dem Grundkörper 12 und dem weiteren Führungselement 66 vorgesehen sein.

Das Führungselement 64 ist der Stirnseite 22 des Grundkörpers 12, welche zu dem Spanraum 24 entfernt ist, zugeordnet. Das Führungselement 64 weist einen Durchmesser auf, der im Wesentlichen dem Durchmesser des Grundkörpers 12 im Bereich der zu dem Spanraum 24 entfernten Stirnseite 22 entspricht. Das Führungselement 64 ist mit einem Zapfen 72 oder dergleichen Antriebselement zur Aufnahme in einer Antriebseinrichtung (nicht gezeigt), beispielsweise dem Futter einer Bohrmaschine, versehen. Der Zapfen 72 ist auf der Längsachse 74 des Führungselementes 64, welche mit der Längsachse 16 des Grundkörpers 12 bzw. der erfindungsgemäßen Reibahle 10 zusammenfällt, angeordnet und profiliert ausgestaltet.

Das Führungselement 66 ist der Stirnseite 20 des Grundkörpers 12, welche zu dem Spanraum 24 benachbart ist, zugeordnet. Das Führungselement 66 weist einen Durchmesser auf, der geringfügig kleiner ist als der Durchmesser des Grundkörpers 12 im Bereich der Stirnseite 20 des Grundkörpers 12. In ganz bevorzugter Weise ist das Führungselement 66 relativ zur Längsachse 76 des Führungselementes 66, welche ebenfalls mit der Längsachse 16 des Grundkörpers 12 bzw. der erfindungsgemäßen Reibahle 10 zusammenfällt, von dem Grundkörper 12 ausgehend hin zu dessen freien Ende 78 konus- oder kegelförmig ausgebildet. Der Durchmesser an dem freien Ende 78 ist mithin etwas kleiner als der Durchmesser des Führungselementes 66 benachbart zu der den Spanraum 24 umgebenden Stirnseite 20 des Grundkörpers 12.

Weitere Ausnehmungen 80, 82, 84 bzw. Hohlräume in dem Grundkörper 16 und den zwei Führungselementen 64, 66 dienen der Gewichtseinsparung der erfindungsgemäßen Reibahle 10 insgesamt.

Der Grundkörper 12 und/oder das/die Führungselement/e 64, 66 und/oder das Spannelement 38 ist/sind aus Metall, insbesondere (nicht-rostendem oder gehärtetem) Stahl, Titan, Mangan, Chrom, Nickel, Aluminium, Messing, Zink, Rotgusslegierungen oder einer Legierung daraus gebildet.

Die vorliegende Erfindung ist nicht auf die dargestellte Ausführungsform der Reibahle 10 beschränkt. So ist es ohne weiteres denkbar, anstelle von wenigstens einer Schneide 14 oder den dargestellten zehn Schneiden 14 eine davon abweichende Anzahl von Schneiden 14 vorzusehen. Darüber hinaus ist es ohne weiteres möglich, die Innenseite 42 der den Spanraum 24 umgebenden Wandung 28 schräger als bei dem Ausführungsbeispiel, wie in den Fig. 1 bis 8 gezeigt, auszugestalten. Die Folge davon ist eine größere radiale Aufweitung des nachlaufenden Randbereiches 36 des Langlochs 26 bei axialer Verschiebung des Spannelementes 38. Gleichermaßen ist es möglich, die Innenseite 42 der den Spanraum 24 umgebenden Wandung 28 mit einer noch geringeren Schräge bzw. Steigung zu versehen und gleichzeitig die axiale Erstreckung des Spanraumes 24 zu vergrößern, um so eine Feineinstellung des nachlaufenden Randbereiches 36 des Langlochs 26 über einen sehr großen Bereich zu ermöglichen.

## Patentansprüche

1. Reibahle mit einem Grundkörper (12) und wenigstens einer dem Grundkörper (12) zugeordneten Schneide (14), wobei der Grundkörper (12) einen sich von einer Stirnseite (20) des Grundkörpers (12) koaxial zur Längsachse (16) des Grundkörpers (12) nach innen erstreckenden, zylindrischen Spanraum (24) umfasst und wobei die wenigstens eine Schneide (14) durch ein im Bereich einer den Spanraum (24) umgebenden Wandung (28) angeordnetes und schräg zur Längsachse (16) des Grundkörpers (12) verlaufendes Langloch (26) gebildet ist, wobei ein vorlaufender Randbereich (32) des Langlochs (26) wenigstens teilweise mit einer Freifläche (34) versehen ist , **dadurch gekennzeichnet, dass** ein nachlaufender Randbereich (36) des Langlochs (26) wenigstens teilweise durch ein in dem Spanraum (24) axial verschiebbares Spannelement (38) radial nach außen aufweitbar ist.

2. Reibahle nach Anspruch 1, **dadurch gekennzeichnet, dass** der Winkel (α) zwischen der Längsachse (16) des Grundkörpers (12) und der Längsachse (30) des Langlochs (26) zwischen 5° und 30°, insbesondere zwischen 8° und 12°, und vorzugsweise etwa 10° beträgt.

3. Reibahle nach Anspruch 1 oder.2, **dadurch gekennzeichnet, dass** das in dem Spanraum (24) axial verschiebbare Spannelement (38) derart ausgebildet ist, dass der nachlaufende Randbereich (36) des Langlochs (26) wenigstens teilweise durch das in dem Spanraum (24) axial verschiebbare Spannelement (38) kontinuierlich radial nach außen aufweitbar ist.

4. Reibahle nach einem der Ansprüche 1 bis 3, **dadurch gekennzeichnet, dass** das Spannelement (38) aus einer Ausgangsstillung in eine Spannstellung axial verschiebbar und in der Spannstellung arretierbar ist, und umgekehrt.

5. Reibahle nach einem der Ansprüche 1 bis 4, **dadurch gekennzeichnet, dass** das Spannelement (38) im Wesentlichen scheibenförmig ausgebildet ist und mit einer Innenseite (42) der den Spanraum (24) umgebenden Wandung (28) über dessen Umfangsfläche (44) in Kontakt steht sowie zusammenwirkt.

6. Reibahle nach einem der Ansprüche 1 bis 5, **dadurch gekennzeichnet, dass** die Innenseite (42) der den Spanraum (24) umgebenden Wandung (28) relativ zur Längsachse (16) des Grundkörpers (12).von der Stirnseite (20) des Grundkörpers (12) ausgehend hin zu einem Boden (46) des Spanraumes (24) konus- oder kegelförmig ausgebildet ist.

7. Reibahle nach einem der Ansprüche 1 bis 6, **dadurch gekennzeichnet, dass** die Umfangsfläche (44) des Spannelementes (38) relativ zur Längsachse (16) des Grundkörpers (12) parallel verlaufend oder von der Stirnseite (20) des Grundkörpers (12) ausgehend hin zu dem Boden (46) des Spanraumes (24) konus- oder kegelförmig ausgebildet ist.

8. Reibahle nach einem der Ansprüche 1 bis 7, **dadurch gekennzeichnet, dass** das Spannelement (38) an einem Schraubbolzen (48), der mit dem Grundkörper (12) über ein Gewinde (50) zusammenwirkt, befestigt ist.

9. Reibahle nach Anspruch 8, **dadurch gekennzeichnet, dass** das Spannelement (38) einen Kragen (52) oder dergleichen Manschette mit einer den Schraubbolzen (48) umgebenden und mit diesem in Kontakt stehenden Anlagefläche (54) zur Erhöhung der Kippstabilität aufweist.

10. Reibahle nach einem der Ansprüche 1 bis 9, **dadurch gekennzeichnet, dass** die Außenseite (18) der den Spanraum (24) umgebenden Wandung (28) in einem ringförmigen Abschnitt (62), welcher im Wesentlichen dem nachlaufenden Randbereich (36) des Langlochs (26) entspricht, relativ zur Längsachse (16) des Grundkörpers (12) von der Stirnseite (20) des Grundkörpers (12) ausgehend hin zu der dem Spanraum (24) entfernten Stirnseite (22) konus- oder kegelförmig ausgebildet ist, wobei insbesondere der Winkel (β) zwischen der Außenseite der den Spanraum (24) umgebenden Wandung (28) und der Längsachse (16) des Grundkörpers (12) in dem ringförmigen Abschnitt (62) zwischen 1° und 5°, insbesondere zwischen 2° und 3°, und vorzugsweise 2,3° beträgt.

11. Reibahle nach Anspruch 10, **dadurch gekennzeichnet, dass** der ringförmige Abschnitt (62) eine Breite aufweist, die wenigstens gleich, insbesondere größer, als der nachlaufende Randbereich (36) des Langlochs (26) ist.

12. Reibahle nach einem der Ansprüche 1 bis 11, **dadurch gekennzeichnet, dass** der Grundkörper (12) mit einem oder zwei Führungselement/en (64, 66), das/die jeweils einer Stirnseite (20, 22) des Grundkörpers (12) zugeordnet ist/sind, lösbar verbunden ist.

13. Reibahle nach einem der Ansprüche 1 bis 12, **dadurch gekennzeichnet, dass** das Führungselement (64), welches der zu dem Spanraum (24) entfernten Stirnseite (22) des Grundkörpers (12) zugeordnet ist, einen Durchmesser aufweist, der im Wesentlichen dem Durchmesser des Grundkörpers (12) im Bereich der zu dem Spanraum (24) entfernten Stirnseite (22) entspricht, wobei insbesondere das Führungselement (64), welches der zu dem Spanraum (24) entfernten Stirnseite (22) des Grundkörpers (12) zugeordnet ist, mit einem auf der Längsachse (74) des Führungselementes (64) angeordneten, profilierten Zapfen (62) oder dergleichen Antriebselement zur Aufnahme in einer Antriebseinrichtung versehen ist.

14. Reibahle nach einem der Ansprüche 1 bis 13, **dadurch gekennzeichnet, dass** das Führungselement (66), welches der zu dem Spanraum (24) benachbarten Stirnseite (20) des Grundkörpers (12) zugeordnet ist, einen Durchmesser aufweist, der geringfügig kleiner ist als der Durchmesser des Grundkörpers (12) im Bereich der Stirnseite (20) des Grundkörpers (12), wobei insbesondere das Führungselement (66), welches der zu dem Spanraum (24) benachbarten Stirnseite (20) des Grundkörpers (12) zugeordnet ist, relativ zur Längsachse (76) des Führungselementes (66) von dem Grundkörper (12) ausgehend hin zu dem freien Ende (78) des Führungselementes (66) konus- oder kegelförmig ausgebildet ist.

15. Verwendung einer Reibahle nach einem der vorhergehenden Ansprüche zum Reiben, insbesondere Ausreiben, einer Bohrung eines Werkstücks oder einer- Buchse aus Metall oder Kunststoff, insbesondere faserverstärktem Kunststoff, und vorzugsweise zum Reiben, insbesondere Ausreiben, von Gleitlagerbuchsen aus Kunststoff, insbesondere faserverstärktem Kunststoff, ganz bevorzugt zur Montage, Wartung und Instandhaltung von personen- oder lastenbefördernden Seilbahnen.

## Claims

1. Reamer with a base body (12) and at least one cutting edge (14) at the base body (12), whereby the base body (12) comprises a cylindrical machining zone (24) coaxially extending inwardly to the longitudinal axis (16) of the base body (12) from a face side (20) of the base body (12) and whereby the at least one cutting edge (14) is formed by a longitudinal hole (26) situated in the area of a wall (28) encompassing the machining zone (24) and extending angularly to the longitudinal axis (16) of the base body (12), whereby a forerunning fringe area (32) of the longitudinal hole (26) at least partially features an open area (34), **characterized in that** a postrunning fringe area (36) of the longitudinal hole (26) may be at least partially widened radially outwards by a clamping element (38) being axially adjustable in the machining zone (24).

2. Reamer according to claim 1, **characterized in that** the angle (α) between the longitudinal axis (16) of the base body (12) and the longitudinal axis (30) of the longitudinal hole (26) is between 5° and 30°, particularly between 8° and 12°, and preferably approximately 10°.

3. Reamer according to claims 1 or 2, **characterized in that** the clamping element (38) axially adjustable in the machining zone (24) is shaped such that the postrunning fringe area (36) of the longitudinal hole (26) may at least partially be continuously widened radially outwards by the clamping element (38) being axially adjustable in the machining zone (24).

4. Reamer according to one of the claims 1 to 3, **characterized in that** the clamping element (38) is axially adjustable from a starting position to a clamping position and may be arrested in the clamping position, and vice versa.

5. Reamer according to one of the claims 1 to 4, **characterized in that** the clamping element (38) has essentially a discoid shape and is in contact with and interacts with the circumferential surface (44) of an inner side (42) of the wall (28) encompassing the machining zone (24).

6. Reamer according to one of the claims 1 to 5, **characterized in that** the inner side (42) of the wall (28) encompassing the machining zone (24) relative to the longitudinal axis (16) of the base body (12) extending from the face side (20) of the base body (12) to a floor (46) of the machining zone (24) has a cone or taper shape.

7. Reamer according to one of the claims 1 to 6, **characterized in that** the circumferential surface (44) of the clamping element (38) relative to the longitudinal axis (16) of the base body (12) running parallel or from the face side (20) of the base body (12) to the floor (46) of the machining zone (24) has a cone or taper shape.

8. Reamer according to one of the claims 1 to 7, **characterized in that** the clamping element (38) is attached to a stud (48), which interacts with the base body (12) through a screw thread (50).

9. Reamer according to claim 8, **characterized in that** the clamping element (38) has a collar (52) or similar sleeve featuring a bearing surface (54) enclosing the stud (48) and being in contact with the stud (48) in order to increase tilt resistance.

10. Reamer according to one of the claims 1 to 9, **characterized in that** the exterior side (18) of the wall (28) encompassing the machining zone (24) in an annular section (62), which essentially corresponds to the postrunning fringe area (36) of the longitudinal hole (26), relative to the longitudinal axis (16) of the base body (12) extending from the face side (20) of the base body (12) to the face side (22) on the distant side of the machining zone (24) has a cone or taper shape, whereby, in particular, the angle (β) between the exterior side of the wall (28) encompassing the machining zone (24) and the longitudinal axis (16) of the base body (12) in the annular section (62) is between 1° and 5°, in particular between 2° and 3°, and preferably 2.3°.

11. Reamer according to claim 10, **characterized in that** the annular section (62) has a width which is at least identical, in particular larger than the postrunning fringe area (36) of the longitudinal hole (26).

12. Reamer according to one of the claims 1 to 11, **characterized in that** the base body (12) is detachably connected to one or two guide element(s) (64, 66), which is/are each allocated to a face side (20, 22) of the base body (12).

13. Reamer according to one of the claims 1 to 12, **characterized in that** the guide element (64) allocated to the face side (22) of the base body (12) distant from the machining zone (24), has a diameter which essentially corresponds to the diameter of the base body (12) in the area of the face side (22) distant from the machining zone (24), whereby in particular the guide element (64), which is allocated to the face side (22) of the base body (12) distant from the machining zone (24), has a profiled peg (62) or similar drive element arranged along the longitudinal axis (74) of the guide element (64) and designated for locking into a drive feature.

14. Reamer according to one of the claims 1 to 13, **characterized in that** the guide element (66), which is allocated to the face side (20) of the base body (12) near the machining zone (24), has a diameter slightly smaller than the diameter of the base body (12) in the area of the face side (20) of the base body (12), whereby particularly the guide element (66) allocated to the face side (20) of the base body (12) near the machining zone (24), relative to the longitudinal axis (76) of the guide element (66) extending from the base body (12) to the open end (78) of the guide element (66), has a cone or taper shape.

15. Use of a reamer based on one of the above claims for reaming, particularly reaming out, of a boring in a machined part or in a metal or plastic bushing, in particular fiber-reinforced plastic, and preferably for reaming, particularly reaming out, of plain bearing bushes made of plastic, in particular fiber-reinforced plastic, and most preferably for installation, maintenance, and servicing cable-car systems for transporting passengers and freight.

## Revendications

1. Alésoir comprenant un corps de base (12) et au moins un tranchant (14) associé au corps de base (12), dans lequel le corps de base (12) englobe un espace à copeaux (24) cylindrique qui s'étend vers l'intérieur depuis une face frontale (20) du corps de base (12) coaxialement à l'axe longitudinal (16) du corps de base (12), et dans lequel ledit au moins un tranchant (14) est formé par un trou oblong (26) agencé dans la région d'une paroi (28) entourant l'espace à copeaux (24) et s'étendant en oblique par rapport à l'axe longitudinal (16) du corps de base (12), et dans lequel une zone de bordure antérieure (32) du trou oblong (26) est dotée d'au moins une surface libre (34), **caractérisé en ce qu'**une zone de bordure postérieure (36) du trou oblong (26) est susceptible de s'élargir radialement vers l'extérieur au moins partiellement au moyen d'un élément de contrainte (38) déplaçable axialement dans l'espace à copeaux (24).

2. Alésoir selon la revendication 1, **caractérisé en ce que** l'angle (α) entre l'axe longitudinal (16) du corps de base (12) et l'axe longitudinal (30) du trou oblong (26) est entre 5° et 30°, en particulier entre 8° et 12°, et s'élève de préférence à environ 10°.

3. Alésoir selon la revendication 1 ou 2, **caractérisé en ce que** l'élément de contrainte (38) axialement déplaçable dans l'espace à copeaux (24) est réalisé de telle façon que la zone de bordure postérieure (36) du trou oblong (26) est susceptible de s'élargir radialement vers l'extérieur de manière continue au moyen de l'élément de contrainte (38) déplaçable axialement dans l'espace à copeaux (24).

4. Alésoir selon l'une des revendications 1 à 3, **caractérisé en ce que** l'élément de contrainte (38) est déplaçable axialement depuis une position de départ jusque dans une position de contrainte et est susceptible d'être arrêté dans la position de contrainte, et inversement.

5. Alésoir selon l'une des revendications 1 à 4, **caractérisé en ce que** l'élément de contrainte (38) est réalisé sensiblement en forme de disque, et de par sa surface périphérique (44), il se trouve en contact avec une face intérieure (42) de la paroi (28) qui entoure l'espace à copeaux (24) et coopère avec celle-ci.

6. Alésoir selon l'une des revendications 1 à 5, **caractérisé en ce que** la face intérieure (42) de la paroi (28) qui entoure l'espace à copeaux (24) est réalisée sous forme conique ou tronconique par rapport à l'axe longitudinal (16) du corps de base (12) en partant de la face frontale (20) du corps de base (12) jusqu'à un fond (46) de l'espace à copeaux (24).

7. Alésoir selon l'une des revendications 1 à 6, **caractérisé en ce que** la surface périphérique (44) de l'élément de tensionnement (38) est réalisée soit en s'étendant parallèlement à l'axe longitudinal (16) du corps de base (12) est réalisée sous forme conique ou tronconique en partant de la face frontale (20) du corps de base (12) jusqu'au fond (46) de l'espace à copeaux (24).

8. Alésoir selon l'une des revendications 1 à 7, **caractérisé en ce que** l'élément de contrainte (38) est fixé sur un boulon à visser (48), qui coopère avec le corps de base (12) via un pas de vis (50).

9. Alésoir selon la revendication 8, **caractérisé en ce que** l'élément de contrainte (38) comprend une collerette (52) ou une manchette similaire avec une surface d'appui (54) qui entoure le boulon à visser (48) et qui se trouve en contact avec celui-ci, pour augmenter la stabilité vis-à-vis d'un basculement.

10. Alésoir selon l'une des revendications 1 à 9, **caractérisé en ce que** la face extérieure (18) de la paroi (28) qui entoure l'espace à copeaux (24) est réalisée, dans un tronçon de forme annulaire (62) qui correspond essentiellement à la zone de bordure postérieure (36) du trou oblong (26), en forme conique ou tronconique par rapport à l'axe longitudinal (16) du corps de base (12) en partant de la face frontale (20) du corps de base (12) jusqu'à la face frontale (22) éloignée de l'espace à copeaux (24), et en particulier l'angle (β) entre la face extérieure de la paroi (28) qui entoure l'espace à copeaux (24) et l'axe longitudinal (16) du corps de base (12) dans le tronçon de forme annulaire (62) est entre 1° et 5°, en particulier entre 2° et 3°, et s'élève de préférence à 2,3°.

11. Alésoir selon la revendication 10, **caractérisé en ce que** le tronçon de forme annulaire (62) présente une largeur qui est au moins égale, en particulier plus grande que la zone de bordure postérieure (36) du trou oblong (26).

12. Alésoir selon l'une des revendications 1 à 11, **caractérisé en ce que** le corps de base (12) est reliée de façon détachable à un ou deux élément(s) de guidage (64, 66) qui est/sont respectivement associé(s) à une face frontale (20, 22) du corps de base (12).

13. Alésoir selon l'une des revendications 1 à 12, **caractérisé en ce que** l'élément de guidage (64) qui est associé à la face frontale (22) du corps de base (12) éloignée de l'espace à copeaux (24) présente un diamètre qui correspond essentiellement au diamètre du corps de base (12) dans la région de la face frontale (22) éloignée de l'espace à copeaux (24), et en particulier l'élément de guidage (64) qui est associé à la face frontale (22) du corps de base (12) éloignée de l'espace à copeaux (24) est doté d'un tenon profilé (62) ou un élément d'entraînement similaire, agencé sur l'axe longitudinal (74) de l'élément de guidage (64), pour être reçu dans un système d'entraînement.

14. Alésoir selon l'une des revendications 1 à 13, **caractérisé en ce que** l'élément de guidage (66) qui est associé à la face frontale (20) du corps de base (12) voisine de l'espace à copeaux (24) présente un diamètre qui est légèrement inférieur au diamètre du corps de base (12) dans la région de la face frontale (20) du corps de base (12), et en particulier l'élément de guidage (66) qui est associé à la face frontale (20) du corps de base (12) voisine de l'espace à copeaux (24) est réalisé en forme de cône ou de tronc de cône par rapport à l'axe longitudinal (76) de l'élément de guidage (66) en partant du corps de base (12) jusqu'à l'extrémité libre (78) de l'élément de guidage (66).

15. Utilisation d'un alésoir selon l'une des revendications précédentes pour aléser, en particulier par rodage, un perçage d'une pièce à usiner ou d'une douille en métal ou en matière plastique, en particulier une matière plastique renforcée par des fibres, de préférence pour aléser, en particulier par rodage, des douilles de paliers glissants en matière plastique, en particulier en matière plastique renforcée par des fibres, de façon tout à fait préférée pour le montage, l'entretien et la maintenance de téléphériques destinés au transport de personnes ou de charges.
